# EUROPEAN PATENT APPLICATION

(11) **EP 4 289 875 A1**
(43) Date of publication of application: **13.12.2023**
(21) Application number: 23178544.5
(22) Date of filing: 09.06.2023
(51) Int. Cl.: C08F 265/10, C08F 20/60

(54) **HIGH MOLECULAR WEIGHT POLYMERIC DISPERSIONS WITH TAILORED MOLECULAR WEIGHT OF POLYMERIC DISPERSANT**

(30) Priority: 10.06.2022 DE 102022114638; 10.06.2022 DE 102022114641; 10.06.2022 DE 102022114640; 10.06.2022 DE 102022114642; 10.06.2022 DE 102022114644
(71) Applicant: Solenis Technologies Cayman, L.P., Wilmington, DE 19803 (US)
(72) Inventor: Bruzzano, Dr. Nathalie, Wilmington, DE, 19803 (US); Boekelo, Christian, Wilmington, DE, 19803 (US); Bröcher, Dr. Markus, Wilmington, DE, 19803 (US)
(74) Representative: LKGlobal UK Ltd.

(57) **Abstract**

The invention relates to methods for manufacturing a polymer dispersion, to polymer dispersions and their use. The methods of manufacturing the polymer dispersion comprise the steps of providing a reaction mixture in an aqueous medium comprising a polymeric dispersant and a monomer composition comprising radically polymerizable monomers, and subjecting the monomer composition in the reaction mixture to a radical polymerization to synthesize a dispersed polymer so as to form the polymer dispersion, wherein the weight average molecular weight of the dispersed polymer is in a specified narrow range. These polymer dispersions are designated as water-in-water (w/w) polymer dispersions.

## Description

The invention relates to methods for manufacturing a polymer dispersion, to polymer dispersions and their use. The methods of manufacturing the polymer dispersion comprise the steps of providing a reaction mixture in an aqueous medium comprising a polymeric dispersant and a monomer composition comprising radically polymerizable monomers, and subjecting the monomer composition in the reaction mixture to a radical polymerization to synthesize a dispersed polymer so as to form the polymer dispersion, wherein the polymeric dispersant has a weight average molecular weight M_{w} of 40.000 to less than 150.000 g/mol. These polymer dispersions are designated as water-in-water (w/w) polymer dispersions.

The foremost objective is to unlock the potential of water and renewable resources to find safer, healthier, more sustainable solutions. Numberless industrial processes are water-based processes. The replacement of environmental harmful substances or their volume reduction in water-based processes form the basis towards more sustainable solutions. The invention aims at this foremost objective in the field of water-in-water polymer dispersions (w/w polymer dispersions). The improvements of w/w polymer dispersions directly correlate with the sustainability in downstream applications, as e.g. in the paper making process. The better such w/w polymer dispersion work as additives in water-based processes, like in the paper making process, the less of such process additives are to be used. Furthermore, the substitution of hydrocarbons supports the foremost objective.

The water-in-water polymer dispersions are useful as flocculants, dewatering (drainage) aids and retention aids in papermaking besides applications in other technical fields. Paper is manufactured by firstly making an aqueous slurry of cellulosic fibers which slurry has a water content of more than 95 wt-%. The final paper sheet has a water content of less than 5 wt-%. The dewatering (drainage) and retention represent crucial steps in papermaking and are important for an efficient paper making process. High-performance w/w polymer dispersions represent a key factor in the paper making process.

A well-known flocculant is given by a w/w polymer dispersion, which is produced by copolymerizing ethylenically unsaturated monomers in an aqueous system comprising a polymeric dispersant resulting in a dispersion comprising the polymeric dispersant and the synthesized copolymer. The US8476391 B2 and US7323510B2 represent early publications of such w/w polymer dispersions. It is well-accepted knowledge in this technical field that the addition of separately synthesized copolymers on the one hand and polymer dispersants on the other hand results in a products having completely different properties compared to the w/w polymer dispersions as disclosed in the above patent documents. It requires the copolymerization within a system comprising the polymeric dispersant in order to obtain high-performance flocculant products e.g. for the paper making process.

These circumstances make the manufacturing of the w/w polymer dispersions to a multi-parameter system. The kind of the ethylenically unsaturated monomer, their ratio, the kind of the polymer dispersant are only a very few parameters influencing the properties of the w/w polymer dispersion. An improvement of the properties of the final product of the w/w polymer dispersion has been subject of numberless attempts in research and development.

There is still the need for improving the properties of w/w polymer dispersions. A desired improvement of the product performance refers to the dispersibility of the polymeric constituents in the w/w polymer dispersions. After having identified the parameters having an impact on said properties, development activity has been spent on how to adjust the parameters for gaining the improvement on the dispersibility of the w/w polymer dispersions.

As a further disadvantage of such manufactured w/w polymer dispersions, the products show instabilities after completion of the manufacturing process. Such instabilities are supported e.g. by alternating temperature during storage.

The invention's underlaying problem relates to the provision of a process for manufacturing w/w polymer dispersions ensuring a high degree of stability of the w/w polymer dispersions, in particular under unfavorable circumstances like e. g. alternating temperatures. In particular, the degree of stability relates to the ratio of batches with an insufficient stability to batches with an adequate stability, which ratio should be zero. As a further invention's underlaying problem, the dispersibility of polymeric constituents of the w/w polymer dispersions are to be improved. The invention's underlaying problem relates to solving the above described drawbacks.

The invention's underlaying problems are solved by the subject-matter of claim 1. Thus, according to a first aspect, the invention relates a method for manufacturing a polymer dispersion comprising the steps of
A) providing a reaction mixture in an aqueous medium comprising
   a) a polymeric dispersant and
   b) a monomer composition comprising radically polymerizable monomers, wherein the radically polymerizable monomers are selected from the group consisting of one or more of a non-ionic ethylenically unsaturated monomer, a cationic ethylenically unsaturated monomer, and an amphiphilic ethylenically unsaturated monomer; and optionally an ethylenically unsaturated cross-linker containing 2, 3, 4 or 5 ethylenically unsaturated groups;
B) subjecting the monomer composition in the reaction mixture to a radical polymerization to synthesize a dispersed polymer and to form the polymer dispersion,
wherein the polymeric dispersant has a weight average molecular weight M_{w} as determined by size exclusion chromatography of 40.000 to less than 150.000 g/mol, preferred 50.000 to 140.000 g/mol, more preferred 60.000 to 130.000, most preferred 85.000 to 125.000 g/mol; and wherein the polymeric dispersant is a homopolymer made of the cationic monomer of formula (II) 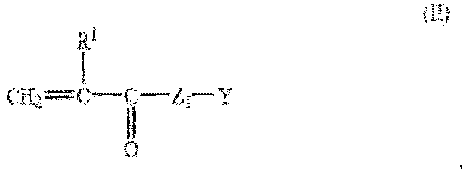 where
R¹ means hydrogen or methyl;
Z₁ is NH or NR₄, wherein R₄ means C₁-C₄-alkyl, and
Y is one of 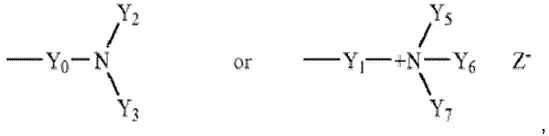 where
Y₀ and Y₁ are a C₁-C₆ alkylene group, optionally substituted with one or more hydroxy groups;
Y₂, Y₃, Y₅, Y₆, Y₇ independently of each other, are each C₁-C₆-alkyl; and
Z⁻ is a counterion.

The method comprises the provision of a reaction mixture comprising the monomers to be copolymerized and a polymeric dispersant. The monomers are polymerized in presence of the polymeric dispersant in an aqueous medium. According to well-established technical knowledge, a polymer dispersion obtained by the method according to the invention cannot be obtained in that the monomer composition is subjected to a copolymerization, whereupon subsequently after the copolymerization, the polymeric dispersant is added. Unique properties are conferred to the polymer dispersion by applying the method according to the invention, which polymer dispersion represents the final product comprising the copolymer obtained from the radically polymerizable monomers together with the polymeric dispersant.

It was surprisingly found that the weight average molecular weight in the range as given according to the invention provides polymer dispersions with an outstanding stability. State of the art polymer dispersion products have a weight average molecular weight of dispersants being higher, e.g. as high as more than 150.000 g/mol and up to 350.000 g/mol.

Polymer dispersions produced by a method of manufacturing in accordance to the invention show an increased stability which can be proven by the stability sedimentation centrifuge test. This test is performed in that the manufactured polymer dispersion is subjected to the action of a centrifuge. After such treatment, the supernatant on top of the sediment phase is analyzed in terms of the polymeric dispersant content. The higher the content in the supernatant, the less polymeric dispersant active for the dispersing the dispersed polymer, i.e. the less stable the polymer dispersion. It was surprisingly found that the lowering of the molecular weight of the polymeric dispersant improves the stability of the polymer dispersion.

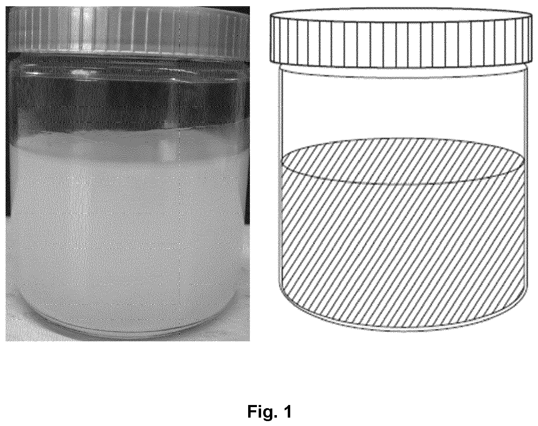

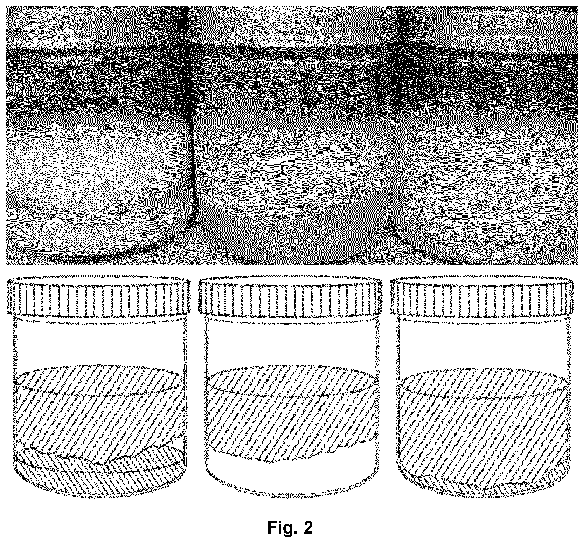

The stability can be observed by visual inspection. Fig. 1 shows a stable dispersion in line with the invention. Fig.2 shows polymer dispersions being instable with visually observable phase separation.

In a preferred method, the monomer composition comprising the radically polymerizable monomers which are selected from the group consisting of one or more of the following:
i. a non-ionic monomer of formula (I) 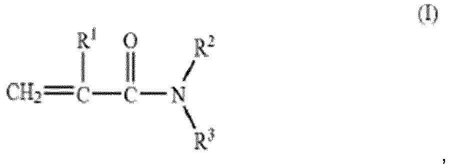 where
   R¹ means hydrogen or methyl;
   R² and R³ are, independently of each other, hydrogen, C₁-C₅-alkyl or C₁-C₅-hydroxyalkyl,
ii. a cationic monomer of formula (II) 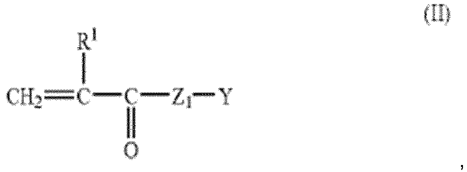 where
   R¹ means hydrogen or methyl;
   Z₁ is O, NH or NR₄, wherein R₄ means C₁-C₄-alkyl, preferably methyl, and
   Y is one of 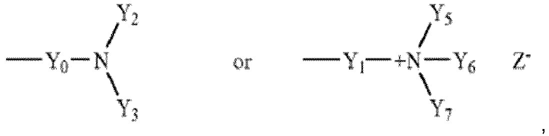 where
   Y₀ and Y₁ are a C₁-C₆ alkylene group, optionally substituted with one or more hydroxy groups, preferably ethylene or propylene, optionally substituted with one hydroxy group;
   Y₂, Y₃, Y₅, Y₆, Y₇ independently of each other, are each C₁-C₆-alkyl, preferably methyl; and
   Z⁻ is a counterion, preferably a halogen, pseudo-halogen, acetate,
   or SO₄CH₃⁻;
iii. an amphiphilic monomer of formulae (III) or (IV) 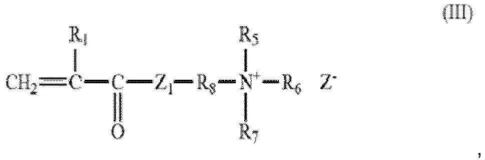 where
   Z₁ is O, NH, NR₄, wherein R₄ means C₁-C₄-alkyl, preferably methyl,
   R¹ means hydrogen or methyl,
   R₈ is a C₁-C₆ alkylene group, preferably ethylene or propylene,
   R₅ and R₆ are, independently of each other, each C₁-C₆-alkyl, preferably methyl,
   R₇ is a C₈-C₃₂ alkyl, optionally substituted with one or more hydroxy groups, preferably C₁₂-C₂₀ alkyl, optionally substituted with one hydroxy group, and Z⁻ is a counterion, preferably a halogen, pseudo-halogen, acetate,
   or SO₄CH₃⁻; or 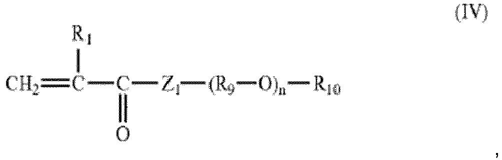 where
   Z₁ is O, NH, NR₄, wherein R₄ means C₁-C₄-alkyl, preferably methyl,
   R¹ means hydrogen or methyl,
   R₁₀ means hydrogen, C₈-C₃₂ alkyl, C₈-C₃₂ aryl and/or C₈-C₃₂ aralkyl, preferably C₁₂-C₂₀ alkyl,
   R₉ is a C₁-C₆ alkylene group, preferably an ethylene group or propylene group, and
   n is an integer between 1 and 50, preferably between 2 and 30, more preferred 3 and 15, most preferred 4 and 8; and
iv. an ethylenically unsaturated cross-linker containing 2, 3, 4 or 5 ethylenically unsaturated groups.

In the framework of the present invention, a cationic monomer is a monomer carrying permanently a positive charge.

According to the preferred embodiment, one or more of the above monomers given under items i. to iv are used as monomers in the monomer composition to be polymerized. It is preferred that a copolymer is polymerized, i.e. that two of the above monomers given under items i. to iv are provided for the monomer composition to be polymerized. It is more preferred that one monomer of item i. and one monomer of item ii. is provided for the monomer composition subjected to the copolymerization. In a preferred embodiment, the radically polymerizable monomers comprise a radically polymerizable non-ionic monomer according to general formula (I); and a radically polymerizable cationic monomer according to general formula (II). A copolymer made of these monomers is beneficial for solving the above problems.

Even further, it is preferred that one monomer of item i one monomer of item ii and one monomer of item iv are provided for the monomer composition subjected to the copolymerization.

In a preferred embodiment, the method is characterized in that the monomer composition comprising the radically polymerizable monomers at least comprises the non-ionic monomer of formula (I) being selected from those in which R¹ means hydrogen or methyl, and R² and R³ are both hydrogen, hydrogen and C1-C3 alkyl, hydrogen and hydroxyethyl, or both C₁-C₃ alkyl, and/or the cationic monomer of formula (II) being selected from those in which R¹ means hydrogen or methyl, and Z₁ is NH or NR₄, wherein R₄ means methyl, Y₁ is C₂-C₆ alkylene, preferably ethylene or propylene, Y₅, Y₆ and Y₇ are all methyl, and Z is a halogen.

In a preferred embodiment, the radically polymerizable monomers comprise a radically polymerizable non-ionic monomer according to general formula (I) which is selected from the group consisting of (meth)acrylamide, N-methyl(meth)acrylamide, N,N-dimethyl(meth)acrylamide, N-ethyl(meth)acrylamide, N,N-diethyl(meth)acrylamide, N-methyl-N-ethyl(meth)-acrylamide, N-isopropyl(meth)acrylamide, and N-hydroxyethyl(meth)acrylamide.

In another preferred embodiment, the radically polymerizable monomers comprise a radically polymerizable cationic monomer according to general formula (II) which is selected from the group consisting of trimethylammonium-C2-C6-alkyl(meth)acrylate halides, and trimethylammonium-C2-C6-alkyl(meth)acrylamide halides. In a most preferred embodiment, the monomer composition comprises a radically polymerizable monomer being (meth)acrylamide together with a radically polymerizable monomer selected from trimethylammonium-C2-C6-alkyl(meth)acrylate halides, in particular being an acryloyl oxyethyl trimethylammonium halide.

Optionally, the monomer composition may further comprise a cross-linker, preferably an ethylenically unsaturated cross-linker; and/or a hydrophobic monomer, preferably a hydrophobic (meth)acrylic acid C4-18-alkyl ester; and/or an ethylenically unsaturated monomer.

In a preferred embodiment, the method is characterized in that the radically polymerizable monomers are selected from the non-ionic monomer of formula (I) and/or the cationic monomer of formula (II), wherein the amount of the radically polymerizable monomers being selected from the non-ionic monomer of formula (I) and/or the cationic monomer of formula (II) is between 80 and less than 100 wt-%, preferred 85 and 99 wt-%, most preferred 90 and 95 wt-% based on the total amount of radically polymerizable monomers, wherein the remainder is selected from the group consisting of any other ethylenically polymerizable monomer, a monomer of formula (III), a monomer of formula (IV), and an ethylenically unsaturated cross-linker containing 2, 3, 4 or 5 ethylenically unsaturated groups.

In this regard, the sum of the values in wt-% needs not to amount to 100 wt-%, since further ethylenically unsaturated monomers (e) may be contained in the monomer composition, i.e. in the reaction mixture, which have to be taken into account when determining the total amount of monomers. Preferably, however, the monomer composition consists of monomers (a) and (b) so that the sum of the two values in wt-% amounts to 100 wt-%, i.e. no further monomers are present.

In a preferred embodiment, the monomer composition comprises
- at least 5 wt.-%, preferably at least 20 wt.-% of the non-ionic monomer of formula (I) 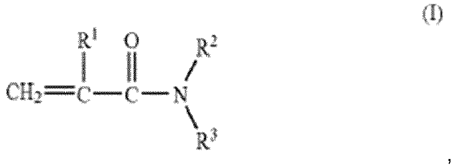 where
   R¹ means hydrogen or methyl;
   R² and R³ are, independently of each other, hydrogen, C₁-C₅-alkyl or C₁-C₅-hydroxyalkyl;
- at least 5 wt.-%, preferably at least 20 wt.-%, more preferred 25 to 47 wt.-%, most preferred 50.5 to 80 wt.-%, of the cationic monomer of formula (II) 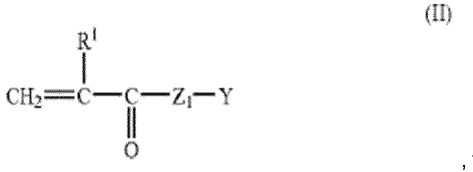 where
   R¹ means hydrogen or methyl;
   Z₁ is O, NH or NR₄, wherein R₄ means C₁-C₄-alkyl, preferably methyl, and
   Y is one of 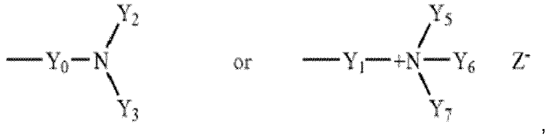 where
   Y₀ and Y₁ are a C₁-C₆ alkylene group, optionally substituted with one or more hydroxy groups, preferably ethylene or propylene, optionally substituted with one hydroxy group;
   Y₂, Y₃, Y₅, Y₆, Y₇ independently of each other, are each C₁-C₆-alkyl, preferably methyl; and
   Z⁻ is a counterion, preferably a halogen, pseudo-halogen, acetate, or SO₄CH₃⁻;
- 0 to 1.25 wt.-%, preferably 0.0001 to 1 wt.-%, more preferred 0.001 to 0.5 wt.-% of the ethylenically unsaturated cross-linker containing 2, 3, 4 or 5 ethylenically unsaturated groups; and
- optionally, further ethylenically unsaturated monomers.

In this regard again, the sum of the values in wt-% needs not to amount to 100 wt-%, since further ethylenically unsaturated monomers besides the monomers of formulae (I) and/or (II) may be contained in the monomer composition, i.e. in the reaction mixture, which have to be taken into account when determining the total amount of monomers. In one preferred embodiment, however, the monomer composition consists of monomers (a) and (b) so that the sum of the two values in wt-% amounts to 100 wt-%, i.e. no further monomers are present.

According to a preferred embodiment, the monomer composition comprising radically polymerizable monomers comprises a cross-linker. Cross-linkers are known to the skilled person. In this preferred embodiment, the monomer composition preferably contains 0.0001 to 1.25 wt.-% of one or more preferably ethylenically unsaturated cross-linkers, based on the total weight of monomers. If ethylenically unsaturated cross-linkers are present, they contain 2, 3, 4 or 5 ethylenically unsaturated groups that are radically polymerizable.

Examples of cross-linkers with two radically polymerizable ethylenically unsaturated groups include:
(1) Alkenyl di(meth)acrylates, such as 1,6-hexanediol di(meth)acrylate, 1,10-decanediol di(meth)acrylate, 1,12-dodecanediol di(meth)acrylate, 1,18-octadecanediol di(meth)acrylate, neopentyl glycol di(meth)acrylate, methylene di(meth)acrylate, 2,2'-bis(hydroxymethyl)-1,3-propanediol di(meth)acrylate, and preferably, ethylene glycol di(meth)acrylate, 1.3-propane-diol di(meth)acrylate, 1,3-butanediol di(meth)acrylate, and 1,4-butanediol di(meth)acrylate;
(2) Alkylene di(meth)acrylamides, e.g. N-methylene di(meth)acrylamide, N,N'-3-methyl-butylidene bis(meth)acrylamide, N,N'-(1,2-dihydroxyethylene) bis(meth)acrylamide, and preferably N,N'-hexamethylene bis(meth)acrylamide, and particularly preferably N,N'-methylene bis(meth)acrylamide;
(3) Polyalkoxydi(meth)acrylates according to general formula (V) 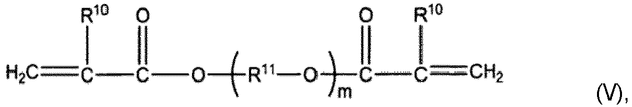 where
   R¹⁰ is hydrogen or methyl;
   R¹¹ is selected from -CH₂CH₂-, -CH₂CH₂CH₂-, -CH₂CH₂CH₂CH₂-, -CH₂CH₂CH₂CH₂CH₂- or -CH₂CH₂CH₂CH₂CH₂CH₂-; and
   m is an integer in the range 2-50.
   Examples of cross-linkers according to general formula (V) include polypropylene glycol di(meth)acrylates with m in the range 4-25; polybutylene glycol di(meth)acrylates with m in the range 5-40; and, preferably, polyethylene glycol di(meth)acrylates with m in the range 2-45, e.g. diethylene glycol di(meth)acrylate, triethylene glycol di(meth)acrylate, tetraethylene glycol di(meth)acrylate; and, more preferably, polyethylene glycol di(meth)acrylates with m in the range 5-20;
(4) Examples of additional di(meth)acrylates which may be used include benzylidene di-(meth)-acrylate, bisphenol-A di(meth)acrylate, 1,3-di(meth)acryloyloxy-Z-propanol, hydro-quinone di(meth)acrylate, ethanedithiol di(meth)acrylate, propanedithiol di(meth)acrylate, polyethylene dithiol di(meth)acrylate, and polypropylene dithiol di(meth)acrylate;
(5) Divinyl compounds, for example, 1,4-butanediol divinyl ether, divinylbenzene, butadiene, 1,6-hexadiene; di(meth)allyl compounds, such as, for example, di(meth)allyl phthalate or di(meth)allyl succinate; vinyl (meth)acrylic compounds, for example, vinyl (meth)acrylate; or preferably (meth)allyl (meth)acrylic compounds, for example, allyl (meth)acrylate.

Examples of cross-linkers having 3 or more ethylenically unsaturated radically polymerizable groups include glycerin tri(meth)acrylate, 2,2-dihydroxymethyl-1-butanol tri(meth)acrylate, trimethylolpropane triethoxy tri(meth)acrylate, trimethacrylamide, (meth)allylidene di(meth)-acrylate, 3-allyloxy-1 ,2-propanediol di(meth)acrylate, triallyl amine, triallyl cyanurate or triallyl isocyanurate; and also (as representative compounds with more than 3 ethylenically unsaturated radically polymerizable groups) pentaerythritol tetra(meth)acrylate and N,N,N'N'-tetra(meth)acryloyl-1 ,5-pentanediamine.

An example of a cross-linker having 5 ethylenically unsaturated radically polymerizable groups is dipentaerithritol-pentaacrylate.

Particularly preferred cross-linkers are selected from the group constsiting of methylene bisacrylamide, polyethylene glycol diacrylate, triallylamine, and tetraallyl ammonium chloride.

Further preferred cross-linkers include asymmetrically cross-linkable monomers, i.e. cross-linkable monomers which rely on different functional groups with respect to the incorporation reaction into the polymer backbone and the cross-linking reaction. Examples of such asymmetrically cross-linkable monomers include N'-methylol acrylamide, N'-methylol methacrylamide and glycidyl(meth)acrylate.

Cross-linkers of this type have the advantage that cross-linking may be initiated subsequently. Thus, cross-linking may be performed under different conditions than the radical polymerization of the main-backbone. Preferably, cross-linking is initiated after changing the reaction conditions, 6.9. the pH value (addition of acid or base), the temperature, and the like. Optionally, the monomer composition further comprises a hydrophobic monomer, preferably a hydrophobic (meth)acrylic acid C4-18-alkyl ester; and/or an ethylenically unsaturated monomer.

According to the invention, the copolymerization is performed in the presence of a polymeric dispersant.

In the state of the art, alternative aqueous polymeric systems are stabilized by low molecular weight salts. A high salt content ensures the stability of the polymeric system. Distinguishing from these systems, the stabilization of the w/w polymer dispersion according to the invention is basically ensured by the polymeric dispersant. This system renders moot a high salt concentration as in state of the art aqueous polymeric systems. In a preferred embodiment, the polymer dispersion has a salt content of less than 15 wt.%, more preferred a salt content of 0.1 to 10 wt.-%, most preferred 1 to 5 wt.-% based on the polymer dispersion. With the term "salt content", low molecular weight salts are meant. The polymeric electrolytes do not count for the calculation of the salt content.

Different from the polymer dispersions stabilized by salt, the present application uses the polymeric dispersant for its stabilization. In a preferred embodiment, the cationic polymeric dispersant is substantially linear, i.e. is not derived from monomer mixtures containing cross-linkers.

The polymeric dispersant is derived from one radically polymerizable, ethylenically unsaturated monomer, i.e. the polymeric dispersant is essentially a homopolymer. The term "essentially" means in this regard, that no second type of a monomer is purposely added when synthesizing the polymeric dispersant. A skilled person understands that the feedstock material for the synthesis of the polymeric dispersant comprises residues of other monomers than the one radically polymerizable, ethylenically unsaturated monomer used for synthesis of the homopolymer made of the cationic monomer of formula (II).

In a preferred embodiment, the method is characterized in that the polymeric dispersant is a homopolymer made of the cationic monomer of formula (II) 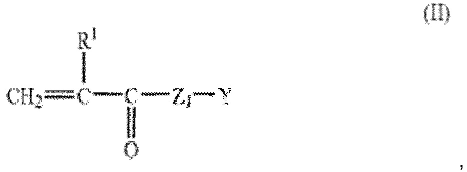 where
R¹ means hydrogen or methyl;
Z₁ is NH or NR₄, wherein R₄ means methyl, and
Y is one of 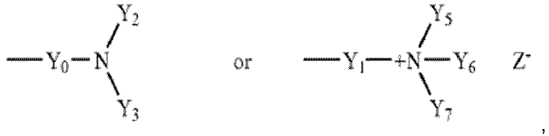 where
Y₀ and Y₁ are ethylene or propylene, optionally substituted with one hydroxy group;
Y₂, Y₃, Y₅, Y₆, Y₇ independently of each other are each methyl; and
Z⁻ is a counterion being a halogen, pseudo-halogen, acetate, or SO₄CH₃⁻.

Preferably, Y₂, Y₃, and/or Y₅, Y₆, Y₇ are identical, more preferred methyl. In a preferred embodiment, Z₁ is NH, Y₀ and Y₁ are ethylene or propylene, and R¹ is hydrogen or methyl. Preferably, the cationic monomer according to general formula (I) is an amide (Z₁ = NH), particularly trimethylammonium-propyl acrylamide (DIMAPA quat).

Preferred radically polymerizable cationic monomers according to general formula (II) include quaternized dialkylaminoalkyl(meth)acrylamides with 1 to 3 C atoms in the alkyl or alkylene groups, more preferably the methyl chloride-quaternized ammonium salt of dimethylamino methyl(meth)acrylamide, dimethylamino ethyl(meth)acrylamide, dimethylamino propyl(meth)acrylamide, diethylamino methyl(meth)acrylamide, diethylamino ethyl(meth)acrylamide, and diethylamino propyl(meth)-acrylamide.

Quaternized dimethylaminopropylacrylamide is particularly preferred. Quaternization may be accomplished by using dimethyl sulfate, diethyl sulfate, methyl chloride or ethyl chloride. In a preferred embodiment, monomers are quaternized with methyl chloride.

In a preferred embodiment, the polymeric dispersant is a homopolymer of trimethylammonium-propyl acrylamide chloride (DIMAPA quat) designated by IUPAC as (3-acrylamidopropyl)trimethylammonium chloride (APTAC).

Preferably, the polymeric dispersant is derived from a monomer composition comprising a cationic monomer selected from the group consisting of (alk)acrylamidoalkyltrialkyl ammonium halides (e.g., trimethylammonium-alkyl(meth)acrylamide halides), (alk)acryloyloxyalkyl trialkyl ammonium halides (e.g., trimethylammoniumalkyl(meth)acrylate halides), alkenyl trialkyl ammonium halides and dialkenyl dialkyl ammonium halides (e.g., diallyldialkylammonium halides). More preferably, the polymeric dispersant is a cationic polymer derived from a monomer composition comprising a cationic monomer selected from the group consisting of trimethylammonium-alkyl(meth)acrylate halides, trimethylammoniumalkyl(meth)acrylamide halides and diallyldialkylammonium halides. Preferably, the aforementioned cationic monomers comprise 6 to 25 carbon atoms, more preferably 7 to 20 carbon atoms, most preferably 7 to 15 carbon atoms and in particular 8 to 12 carbon atoms.

In a preferred embodiment, the polymeric dispersant is derived from a dialkenyl dialkyl ammonium halide, preferably a diallyl dimethyl ammonium halide (DADMAC).

According to a preferred embodiment, the method is characterized in that the polymeric dispersant is a homopolymer made of a (meth)acryloyl amidopropyl trimethylammonium salt or a (meth)acryloyl oxyethyl trimethylammonium salt.

In the framework of this application, the halide may be any acceptable halide as e.g. chloride, bromide or iodide; the counter ions of the salts may be any acceptable counter ions as e.g. halides, methosulfate, sulfate or others.

The invention is in particular efficient if the method is characterized in that the total weight of the polymeric dispersant based on the total weight of the polymer dispersion is in the range of 10 to 28 wt.-%, preferred 12 to 26 wt.%, more preferred 14 to 24 wt.-%, even more preferred 16 to 22 wt.-%. Compared to state of the art methods of manufacturing polymer dispersants, the amount of the polymeric dispersant used in the method according to the invention is higher.

It was surprisingly found that the combination of the features according to which the weight average molecular weight is in the claimed range together with the above total weight of the polymeric dispersant ameliorates the beneficial effects. If the low weight average molecular weight is combined with a comparable high amount of polymeric dispersants, the beneficial technical effects associated with the present invention are enhanced. The stability of the polymer dispersions manufactured by such methods is improved.

In a preferred embodiment, the method is performed in that step B) is conducted by sequentially or simultaneously adding to the reaction mixture at least a part of a predetermined amount of a redox initiator system comprising an oxidizing agent and a reducing agent, at least a part of a predetermined amount of a first radical initiator and at least a part of a predetermined amount of a second radical initiator.

According to a preferred embodiment, the method comprises the step of
C) reducing the residual monomer content by adding to the reaction mixture the remainder of said predetermined amount of the redox initiator system, the remainder of said predetermined amount of the first radical initiator, and/or the remainder of said predetermined amount of the second radical initiator; and/or a third radical initiator.

The addition of said initiators enable the removal of the monomer such that they have no detrimental effect on stability of the obtained dispersion.

According to a preferred embodiment the method is characterized in that the charge density of the dispersed polymer amounts to 5 to 40 mole%, preferably 8 to 35 mole%, more preferred 10 to 30 mole%, most preferred 10 to 28 mole%. While the charge density of the polymeric dispersant is preferably 100 mole%, i.e. the polymeric dispersant is a 100 mole% polyelectrolyte, the dispersed polymer obtained from the copolymerization in step B) is partially a polyelectrolyte. The charge density is calculated from the monomeric constituents, whereupon number of monomeric constituents carrying a formal charge per total number of monomeric constituents results in the molar percentage of the charge density. Thus, the charge density is calculated from the monomeric constituents of the dispersed polymer.

If the charge density is in the above range, the beneficial effect in terms of stability and viscosity is enhanced. In particular, the combination of the ratio of the polymeric dispersant to the dispersed polymer in the polymer dispersion together with the charge density solves the above problems. Without being bound to any theory it could be assumed that the dispersing ability of the polymer dispersant depends on said ratio together with the property of the charge density.

In a preferred embodiment, the method is characterized in that step B is performed by agitating.

According to a further preferred embodiment, the viscosity of the obtained polymer dispersion amounts to 2.800 mPas to 6.500 mPas, preferably 3.000 mPas to 5.600 mPas, more preferred 3.200 mPas to 5.400 mPas, most preferred 3.400 mPas to 4.000 mPas, as measured with a Brookfield viscometer with spindle 4 at 20°C and an angle speed of 10 rpm.

It is known by a person skilled in the art, that the product viscosity distinguishes from the viscosity of the reaction mixture during the method of manufacturing. The viscosity of the product has an important impact on the dispensibility when used for the desired application. If the product exhibits a viscosity in the above ranges, the polymer dispersion can be handled in an appropriate manner.

In a further preferred embodiment, the method is characterized in that step B is performed by agitating while measuring torque of a motor-driven agitator. Alternatively, the method is characterized in that step B is performed by agitating and torque of a motor-driven agitator is kept below 65 N/cm. If torque is 65 N/cm or higher, a gelling is observed resulting in a final product which does not provide the required properties as a flocculant.

The invention's underlaying problems are further solved by the subject-matter of claim 12. Thus, according to a second aspect, the invention relates to a polymer dispersion comprising
a) a polymeric dispersant and
b) dispersed polymer derived from a monomer composition comprising radically polymerizable monomers, wherein the radically polymerizable monomers are selected from the group consisting of one or more of a non-ionic ethylenically unsaturated monomer, a cationic ethylenically unsaturated monomer, and an amphiphilic ethylenically unsaturated monomer; and optionally an ethylenically unsaturated cross-linker containing 2, 3, 4 or 5 ethylenically unsaturated groups;

wherein the polymeric dispersant has a weight average molecular weight M_{w} as determined by size exclusion chromatography of 40.000 to less than 150.000 g/mol, preferred 50.000 to 140.000 g/mol, more preferred 60.000 to 130.000, most preferred 85.000 to 125.000 g/mol; and wherein the polymeric dispersant is a homopolymer made of the cationic monomer of formula (II) 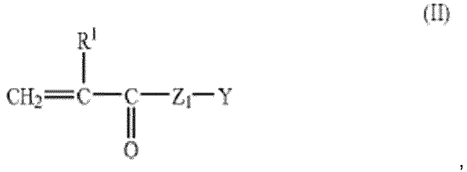 where
R¹ means hydrogen or methyl;
Z₁ is NH or NR₄, wherein R₄ means C₁-C₄-alkyl, and
Y is one of 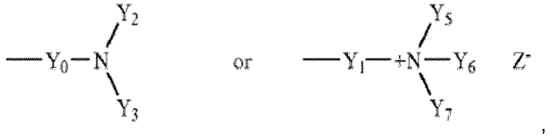 where
Y₀ and Y₁ are a C₁-C₆ alkylene group, optionally substituted with one or more hydroxy groups;
Y₂, Y₃, Y₅, Y₆, Y₇ independently of each other, are each C₁-C₆-alkyl; and
Z⁻ is a counterion.

The invention's underlaying problems are further solved by the subject-matter of claim 13. Thus, according to a third aspect, the invention relates to a polymer dispersion obtained by a method for manufacturing the polymer dispersion according to the invention comprising the steps of
A) providing a reaction mixture in an aqueous medium comprising
   a) a polymeric dispersant and
   b) a monomer composition comprising radically polymerizable monomers, wherein the radically polymerizable monomers are selected from the group consisting of one or more of a non-ionic ethylenically unsaturated monomer, a cationic ethylenically unsaturated monomer, and an amphiphilic ethylenically unsaturated monomer; and optionally an ethylenically unsaturated cross-linker containing 2, 3, 4 or 5 ethylenically unsaturated groups;
B) subjecting the monomer composition in the reaction mixture to a radical polymerization to synthesize a dispersed polymer and to form the polymer dispersion,

wherein the polymeric dispersant has a weight average molecular weight M_{w} as determined by size exclusion chromatography of 40.000 to less than 150.000 g/mol, preferred 50.000 to 140.000 g/mol, more preferred 60.000 to 130.000, most preferred 85.000 to 125.000 g/mol; and wherein the polymeric dispersant is a homopolymer made of the cationic monomer of formula (II) 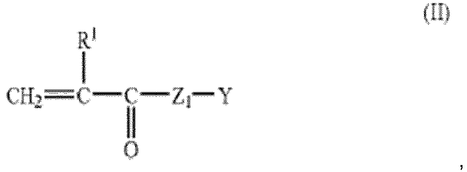 where
R¹ means hydrogen or methyl;
Z₁ is NH or NR₄, wherein R₄ means C₁-C₄-alkyl, and
Y is one of 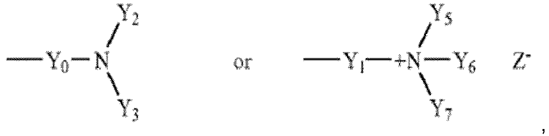 where
Y₀ and Y₁ are a C₁-C₆ alkylene group, optionally substituted with one or more hydroxy groups;
Y₂, Y₃, Y₅, Y₆, Y₇ independently of each other, are each C₁-C₆-alkyl; and
Z⁻ is a counterion.

The invention's underlaying problems are further solved by the subject-matter of claim 14. Thus, according to a fourth aspect, the invention relates to the use of the polymer dispersion according to the invention
a. as a flocculant in the sedimentation, flotation or filtration of solids,
b. as a thickener,
c. as a contaminant control,
d. as a dry strength aid, retention agent or drainage aid in papermaking.

Features relating to preferred embodiments of the first aspect of the present invention, which are solely disclosed relating to the first aspect of the invention represent preferred embodiments of the second, third and fourth embodiment as well.

In the following, exemplary embodiments (A) to (K) are disclosed which represent particularly preferred embodiments.
(A) Method for manufacturing a polymer dispersion comprising the steps of
   A) providing a reaction mixture in an aqueous medium comprising
      a) a polymeric dispersant and
      b) a monomer composition comprising radically polymerizable monomers, wherein the radically polymerizable monomers are selected from the group consisting of one or more of a non-ionic ethylenically unsaturated monomer, a cationic ethylenically unsaturated monomer, and an amphiphilic ethylenically unsaturated monomer, and optionally an ethylenically unsaturated cross-linker containing 2, 3, 4 or 5 ethylenically unsaturated groups;
   B) subjecting the monomer composition to a radical polymerization to synthesize a dispersed polymer and to form the polymer dispersion,

   wherein the polymeric dispersant has a weight average molecular weight M_{w} as determined by size exclusion chromatography of 40.000 to less than 150.000 g/mol, preferred 50.000 to 140.000 g/mol, more preferred 60.000 to 130.000, most preferred 85.000 to 125.000 g/mol; wherein the polymeric dispersant is a homopolymer made of the cationic monomer of formula (II) 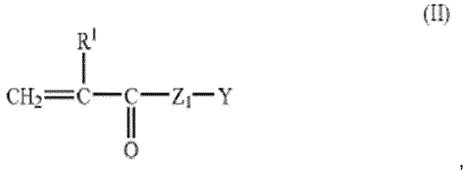 where
   R¹ means hydrogen or methyl;
   Z₁ is NH or NR₄, wherein R₄ means C₁-C₄-alkyl, and
   Y is one of 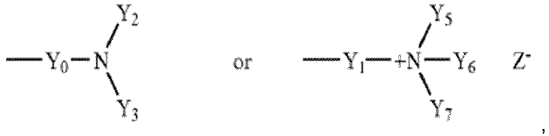 where
   Y₀ and Y₁ are a C₁-C₆ alkylene group, optionally substituted with one or more hydroxy groups;
   Y₂, Y₃, Y₅, Y₆, Y₇ independently of each other, are each C₁-C₆-alkyl; and
   Z⁻ is a counterion; and
   wherein the monomer composition comprising the radically polymerizable monomers are selected from the group consisting of one or more of the following:
      i. a non-ionic monomer of formula (I) 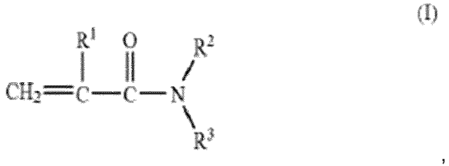 where
         R¹ means hydrogen or methyl;
         R² and R³ are, independently of each other, hydrogen, C₁-C₅-alkyl or C₁-C₅-hydroxyalkyl,
      ii. a cationic monomer of formula (II) 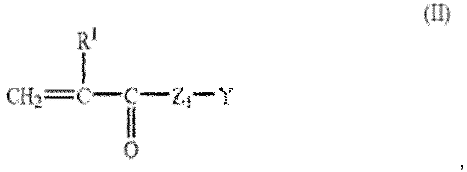 where
         R¹ means hydrogen or methyl;
         Z₁ is O, NH or NR₄, wherein R₄ means C₁-C₄-alkyl, preferably methyl, and
         Y is one of 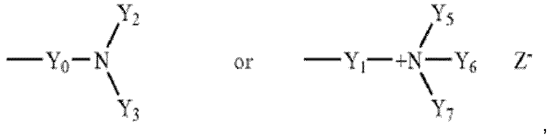 where
         Y₀ and Y₁ are a C₁-C₆ alkylene group, optionally substituted with one or more hydroxy groups, preferably ethylene or propylene, optionally substituted with one hydroxy group;
         Y2, Y3, Y5, Y6, Y7 independently of each other, are each C₁-C₆-alkyl, preferably methyl; and
         Z⁻ is a counterion, preferably a halogen, pseudo-halogen, acetate, or SO₄CH₃⁻;
            and
      iv. an ethylenically unsaturated cross-linker containing 2, 3, 4 or 5 ethylenically unsaturated groups, wherein preferably the ethylenically unsaturated cross-linker containing 2, 3, 4 or 5 ethylenically unsaturated groups is present in an amount of 0.0001 to 1.25 wt.-%, based on the total weight of monomer composition.
(B) Method for manufacturing a polymer dispersion comprising the steps of
   A) providing a reaction mixture in an aqueous medium comprising
      a) a polymeric dispersant and
      b) a monomer composition comprising radically polymerizable monomers, wherein the radically polymerizable monomers are selected from the group consisting of one or more of a non-ionic ethylenically unsaturated monomer, a cationic ethylenically unsaturated monomer, and an amphiphilic ethylenically unsaturated monomer, and optionally an ethylenically unsaturated cross-linker containing 2, 3, 4 or 5 ethylenically unsaturated groups;
   B) subjecting the monomer composition to a radical polymerization to synthesize a dispersed polymer and to form the polymer dispersion,

   wherein the polymeric dispersant has a weight average molecular weight M_{w} as determined by size exclusion chromatography of 40.000 to less than 150.000 g/mol, preferred 50.000 to 140.000 g/mol, more preferred 60.000 to 130.000, most preferred 85.000 to 125.000 g/mol; wherein the polymeric dispersant is a homopolymer made of the cationic monomer of formula (II) 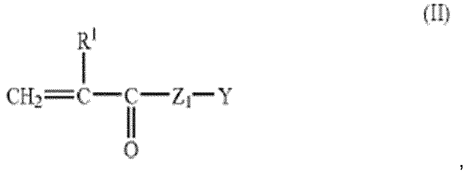 where
   R¹ means hydrogen or methyl;
   Z₁ is NH or NR₄, wherein R₄ means methyl, and
   Y is one of 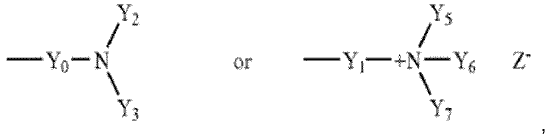 where
   Y₀ and Y₁ are ethylene or propylene, optionally substituted with one hydroxy group;
   Y₂, Y₃, Y₅, Y₆, Y₇ independently of each other are methyl; and
   Z⁻ is a counterion; and
   wherein the monomer composition comprising the radically polymerizable monomers are selected from the group consisting of one or more of the following:
      i. a non-ionic monomer of formula (I) 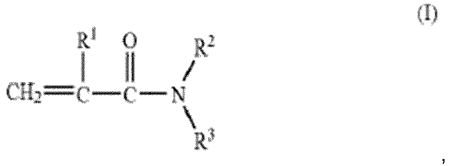 where
         R¹ means hydrogen or methyl;
         R² and R³ are, independently of each other, hydrogen, C₁-C₅-alkyl or C₁-C₅-hydroxyalkyl,
      ii. a cationic monomer of formula (II) 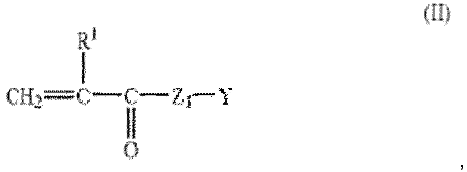 where
         R¹ means hydrogen or methyl;
         Z₁ is O, NH or NR₄, wherein R₄ means methyl, and
         Y is one of 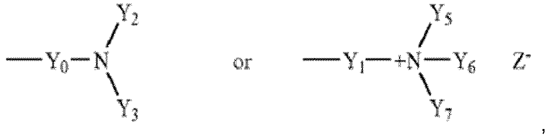 where
         Y₀ and Y₁ are a C₁-C₆ alkylene group, optionally substituted with one or more hydroxy groups, preferably ethylene or propylene, optionally substituted with one hydroxy group;
         Y2, Y3, Y5, Y6, Y7 are each methyl; and
         Z⁻ is a counterion, preferably a halogen, pseudo-halogen, acetate,
         or SO₄CH₃⁻;
            and
      iv. 0.0001 to 1.25 wt.-% of an ethylenically unsaturated cross-linker containing 2 or 3 ethylenically unsaturated groups, based on the total weight of monomer composition.
(C) Method for manufacturing a polymer dispersion comprising the steps of
   A) providing a reaction mixture in an aqueous medium comprising
      a) a polymeric dispersant and
      b) a monomer composition comprising radically polymerizable monomers, wherein the radically polymerizable monomers are selected from the group consisting of one or more of a non-ionic ethylenically unsaturated monomer, a cationic ethylenically unsaturated monomer, and an amphiphilic ethylenically unsaturated monomer, and optionally an ethylenically unsaturated cross-linker containing 2, 3, 4 or 5 ethylenically unsaturated groups;
   B) subjecting the monomer composition to a radical polymerization to synthesize a dispersed polymer and to form the polymer dispersion,

   wherein the polymeric dispersant has a weight average molecular weight M_{w} as determined by size exclusion chromatography of 40.000 to less than 150.000 g/mol, preferred 50.000 to 140.000 g/mol, more preferred 60.000 to 130.000, most preferred 85.000 to 125.000 g/mol; wherein the polymeric dispersant is a homopolymer made of the cationic monomer of formula (II) 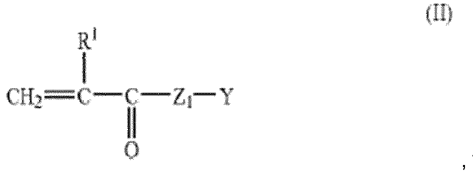 where
   R¹ means hydrogen or methyl;
   Z₁ is NH or NR₄, wherein R₄ means C₁-C₄-alkyl, and
   Y is one of 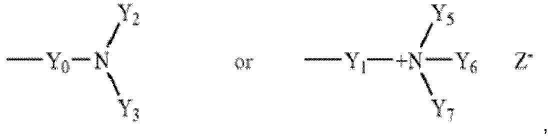 where
   Y₀ and Y₁ are a C₁-C₆ alkylene group, optionally substituted with one or more hydroxy groups;
   Y₂, Y₃, Y₅, Y₆, Y₇ independently of each other, are each C₁-C₆-alkyl; and
   Z⁻ is a counterion; and
   wherein the monomer composition comprising at least one radically polymerizable monomer and 0.0001 to 1.25 wt.-% of an ethylenically unsaturated cross-linker containing 2, 3, 4 or 5 ethylenically unsaturated groups, based on the total weight of monomer composition.
(D) Method for manufacturing a polymer dispersion comprising the steps of
   A) providing a reaction mixture in an aqueous medium comprising
      a) a polymeric dispersant and
      b) a monomer composition comprising radically polymerizable monomers, wherein the radically polymerizable monomers are selected from the group consisting of one or more of a non-ionic ethylenically unsaturated monomer, a cationic ethylenically unsaturated monomer, and an amphiphilic ethylenically unsaturated monomer; and optionally an ethylenically unsaturated cross-linker containing 2, 3, 4 or 5 ethylenically unsaturated groups;
   B) subjecting the monomer composition to a radical polymerization to synthesize a dispersed polymer and to form the polymer dispersion,

   wherein the polymeric dispersant has a weight average molecular weight M_{w} as determined by size exclusion chromatography of 40.000 to less than 150.000 g/mol, preferred 50.000 to 140.000 g/mol, more preferred 60.000 to 130.000, most preferred 85.000 to 125.000 g/mol; wherein the polymeric dispersant is a homopolymer made of the cationic monomer of formula (II) 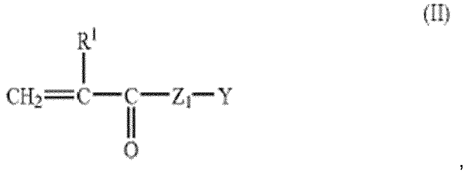 where
   R¹ means hydrogen or methyl;
   Z₁ is NH or NR₄, wherein R₄ means C₁-C₄-alkyl, and
   Y is one of 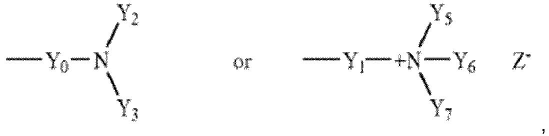 where
   Y₀ and Y₁ are a C₁-C₆ alkylene group, optionally substituted with one or more hydroxy groups;
   Y₂, Y₃, Y₅, Y₆, Y₇ independently of each other, are each C₁-C₆-alkyl; and
   Z⁻ is a counterion; and
   wherein the monomer composition comprising the radically polymerizable monomers at least comprises the non-ionic monomer of formula (I) being selected from those in which R¹ means hydrogen or methyl, and R² and R³ are both hydrogen, hydrogen and C1-C3 alkyl, hydrogen and hydroxyethyl, or both C₁-C₃ alkyl; the cationic monomer of formula (II) being selected from those in which R¹ means hydrogen or methyl, and Z₁ is O, NH or NR₄, wherein R₄ means methyl, Y₁ is C₂-C₆ alkylene, preferably ethylene or propylene, Y₅, Y₆ and Y₇ are all methyl, and Z is a halogen; and an ethylenically unsaturated cross-linker containing 2 or 3 ethylenically unsaturated groups.
(E) Method for manufacturing a polymer dispersion comprising the steps of
   A) providing a reaction mixture in an aqueous medium comprising
      a) a polymeric dispersant and
      b) a monomer composition comprising radically polymerizable monomers, wherein the radically polymerizable monomers are selected from the group consisting of one or more of a non-ionic ethylenically unsaturated monomer, a cationic ethylenically unsaturated monomer, and an amphiphilic ethylenically unsaturated monomer; and optionally an ethylenically unsaturated cross-linker containing 2, 3, 4 or 5 ethylenically unsaturated groups;
   B) subjecting the monomer composition to a radical polymerization to synthesize a dispersed polymer and to form the polymer dispersion,

   wherein the polymeric dispersant has a weight average molecular weight M_{w} as determined by size exclusion chromatography of 40.000 to less than 150.000 g/mol, preferred 50.000 to 140.000 g/mol, more preferred 60.000 to 130.000, most preferred 85.000 to 125.000 g/mol; wherein the polymeric dispersant is a homopolymer made of the cationic monomer of formula (II) 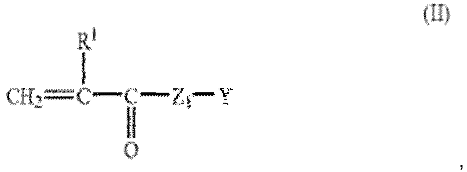 where
   R¹ means hydrogen or methyl;
   Z₁ is NH or NR₄, wherein R₄ means C₁-C₄-alkyl, and
   Y is one of 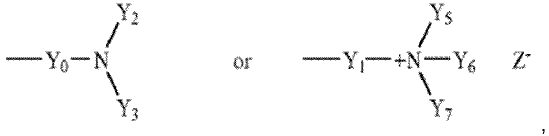 where
   Y₀ and Y₁ are a C₁-C₆ alkylene group, optionally substituted with one or more hydroxy groups;
   Y₂, Y₃, Y₅, Y₆, Y₇ independently of each other, are each C₁-C₆-alkyl; and
   Z⁻ is a counterion; and
   wherein the monomer composition comprising the radically polymerizable monomers essentially consists of the non-ionic monomer of formula (I) being selected from those in which R¹ means hydrogen or methyl, and R² and R³ are both hydrogen, hydrogen and C1-C3 alkyl, hydrogen and hydroxyethyl, or both C₁-C₃ alkyl; the cationic monomer of formula (II) being selected from those in which R¹ means hydrogen or methyl, and Z₁ is O, NH or NR₄, wherein R₄ means methyl, Y₁ is C₂-C₆ alkylene, preferably ethylene or propylene, Y₅, Y₆ and Y₇ are all methyl, and Z is a halogen; and an ethylenically unsaturated cross-linker containing 2 or 3 ethylenically unsaturated groups.
(F) Method for manufacturing a polymer dispersion comprising the steps of
   A) providing a reaction mixture in an aqueous medium comprising
      a) a polymeric dispersant and
      b) a monomer composition comprising radically polymerizable monomers, wherein the radically polymerizable monomers are selected from the group consisting of one or more of a non-ionic ethylenically unsaturated monomer, a cationic ethylenically unsaturated monomer, and an amphiphilic ethylenically unsaturated monomer, and optionally an ethylenically unsaturated cross-linker containing 2, 3, 4 or 5 ethylenically unsaturated groups;
   B) subjecting the monomer composition to a radical polymerization to synthesize a dispersed polymer and to form the polymer dispersion,

   wherein the polymeric dispersant has a weight average molecular weight M_{w} as determined by size exclusion chromatography of 40.000 to less than 150.000 g/mol, preferred 50.000 to 140.000 g/mol, more preferred 60.000 to 130.000, most preferred 85.000 to 125.000 g/mol; wherein the polymeric dispersant is a homopolymer made of the cationic monomer of formula (II) 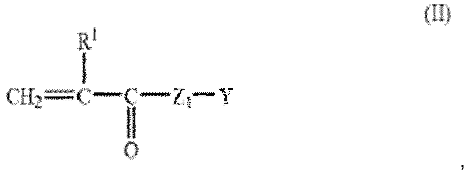 where
   R¹ means hydrogen or methyl;
   Z₁ is NH or NR₄, wherein R₄ means C₁-C₄-alkyl, and
   Y is one of 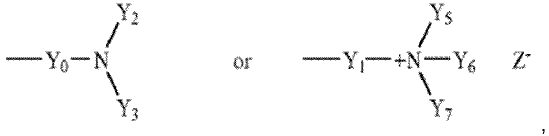 where
   Y₀ and Y₁ are a C₁-C₆ alkylene group, optionally substituted with one or more hydroxy groups;
   Y₂, Y₃, Y₅, Y₆, Y₇ independently of each other, are each C₁-C₆-alkyl; and
   Z⁻ is a counterion; and
   wherein the monomer composition comprising the radically polymerizable monomers at least comprises the non-ionic monomer of formula (I) being selected from those in which R¹ means hydrogen or methyl, and R² and R³ are both hydrogen, hydrogen and C1-C3 alkyl, hydrogen and hydroxyethyl, or both C₁-C₃ alkyl, and/or the cationic monomer of formula (II) being selected from those in which R¹ means hydrogen or methyl, and Z₁ is O, NH or NR₄, wherein R₄ means methyl, Y₁ is C₂-C₆ alkylene, preferably ethylene or propylene, Y₅, Y₆ and Y₇ are all methyl, and Z is a halogen.
(G) Method for manufacturing a polymer dispersion comprising the steps of
   A) providing a reaction mixture in an aqueous medium comprising
      a) a polymeric dispersant and
      b) a monomer composition comprising radically polymerizable monomers, wherein the radically polymerizable monomers are selected from the group consisting of one or more of a non-ionic ethylenically unsaturated monomer, a cationic ethylenically unsaturated monomer, and an amphiphilic ethylenically unsaturated monomer, and optionally an ethylenically unsaturated cross-linker containing 2, 3, 4 or 5 ethylenically unsaturated groups;
   B) subjecting the monomer composition to a radical polymerization to synthesize a dispersed polymer and to form the polymer dispersion,

   wherein the polymeric dispersant has a weight average molecular weight M_{w} as determined by size exclusion chromatography of 40.000 to less than 150.000 g/mol, preferred 50.000 to 140.000 g/mol, more preferred 60.000 to 130.000, most preferred 85.000 to 125.000 g/mol;
   wherein the radically polymerizable monomers comprise a radically polymerizable non-ionic monomer according to general formula (I) which is selected from the group consisting of (meth)acrylamide, N-methyl(meth)acrylamide, N,N-dimethyl(meth)acrylamide, N-ethyl(meth)acrylamide, N,N-diethyl(meth)acrylamide, N-methyl-N-ethyl(meth)-acrylamide, N-isopropyl(meth)acrylamide, and N-hydroxyethyl(meth)acrylamide and a radically polymerizable cationic monomer according to general formula (II) which is selected from the group consisting of trimethylammonium-C2-C6-alkyl(meth)acrylate halides, and trimethylammonium-C2-C6-alkyl(meth)acrylamide halides,
   and wherein the polymeric dispersant is a homopolymer made of a (meth)acryloyl amidopropyl trimethylammonium salt.
(H) Method for manufacturing a polymer dispersion comprising the steps of
   A) providing a reaction mixture in an aqueous medium comprising
      a) a polymeric dispersant and
      b) a monomer composition comprising radically polymerizable monomers, wherein the radically polymerizable monomers are selected from the group consisting of one or more of a non-ionic ethylenically unsaturated monomer, a cationic ethylenically unsaturated monomer, and an amphiphilic ethylenically unsaturated monomer, and optionally an ethylenically unsaturated cross-linker containing 2, 3, 4 or 5 ethylenically unsaturated groups;
   B) subjecting the monomer composition to a radical polymerization to synthesize a dispersed polymer and to form the polymer dispersion,

   wherein the polymeric dispersant has a weight average molecular weight M_{w} as determined by size exclusion chromatography of 40.000 to less than 150.000 g/mol, preferred 50.000 to 140.000 g/mol, more preferred 60.000 to 130.000, most preferred 85.000 to 125.000 g/mol;
   wherein the monomer composition comprises a radically polymerizable monomer being (meth)acrylamide together with a radically polymerizable monomer selected from trimethylammonium-C2-C6-alkyl(meth)acrylate halides, preferably being an acryloyl oxyethyl trimethylammonium halide, and wherein the polymeric dispersant is a homopolymer made of a (meth)acryloyl amidopropyl trimethylammonium salt.
(I) Method for manufacturing a polymer dispersion comprising the steps of
   A) providing a reaction mixture in an aqueous medium comprising
      a) a polymeric dispersant and
      b) a monomer composition comprising radically polymerizable monomers, wherein the radically polymerizable monomers are selected from the group consisting of one or more of a non-ionic ethylenically unsaturated monomer, a cationic ethylenically unsaturated monomer, and an amphiphilic ethylenically unsaturated monomer, and optionally an ethylenically unsaturated cross-linker containing 2, 3, 4 or 5 ethylenically unsaturated groups;
   B) subjecting the monomer composition in the reaction mixture to a radical polymerization to synthesize a dispersed polymer and to form the polymer dispersion,

   wherein the polymeric dispersant has a weight average molecular weight M_{w} as determined by size exclusion chromatography of 40.000 to less than 150.000 g/mol, preferred 50.000 to 140.000 g/mol, more preferred 60.000 to 130.000, most preferred 85.000 to 125.000 g/mol;
   wherein the radically polymerizable monomers comprise a radically polymerizable non-ionic monomer according to general formula (I) which is selected from the group consisting of (meth)acrylamide, N-methyl(meth)acrylamide, N,N-dimethyl(meth)acrylamide, N-ethyl(meth)acrylamide, N,N-diethyl(meth)acrylamide, N-methyl-N-ethyl(meth)-acrylamide, N-isopropyl(meth)acrylamide, and N-hydroxyethyl(meth)acrylamide and a radically polymerizable cationic monomer according to general formula (II) which is selected from the group consisting of trimethylammonium-C2-C6-alkyl(meth)acrylate halides, and trimethylammonium-C2-C6-alkyl(meth)acrylamide halides,
   wherein the polymeric dispersant is a homopolymer made of a (meth)acryloyl amidopropyl trimethylammonium salt,
   and wherein the total weight of the polymeric dispersant based on the total weight of the polymer dispersion is in the range of 10 to 28 wt.-%, preferred 12 to 26 wt.%, more preferred 14 to 24 wt.-%, even more preferred 16 to 22 wt.-%.
(J) Method for manufacturing a polymer dispersion comprising the steps of
   A) providing a reaction mixture in an aqueous medium comprising
      a) a polymeric dispersant and
      b) a monomer composition comprising radically polymerizable monomers, wherein the radically polymerizable monomers are selected from the group consisting of one or more of a non-ionic ethylenically unsaturated monomer, a cationic ethylenically unsaturated monomer, and an amphiphilic ethylenically unsaturated monomer, and optionally an ethylenically unsaturated cross-linker containing 2, 3, 4 or 5 ethylenically unsaturated groups;
   B) subjecting the monomer composition in the reaction mixture to a radical polymerization to synthesize a dispersed polymer and to form the polymer dispersion,

   wherein the polymeric dispersant has a weight average molecular weight M_{w} as determined by size exclusion chromatography of 40.000 to less than 150.000 g/mol, preferred 50.000 to 140.000 g/mol, more preferred 60.000 to 130.000, most preferred 85.000 to 125.000 g/mol;
   wherein the viscosity of the polymer dispersion amounts to 2.800 mPas to 6.500 mPas, preferably 3.000 mPas to 5.600 mPas, more preferred 3.200 mPas to 5.400 mPas, most preferred 3.400 mPas to 4.000 mPas, as measured with a Brookfield viscometer with spindle 4 at 20°C and an angle speed of 10 rpm;
   wherein the radically polymerizable monomers comprise a radically polymerizable non-ionic monomer according to general formula (I) which is selected from the group consisting of (meth)acrylamide, N-methyl(meth)acrylamide, N,N-dimethyl(meth)acrylamide, N-ethyl(meth)acrylamide, N,N-diethyl(meth)acrylamide, N-methyl-N-ethyl(meth)-acrylamide, N-isopropyl(meth)acrylamide, and N-hydroxyethyl(meth)acrylamide and a radically polymerizable cationic monomer according to general formula (II) which is selected from the group consisting of trimethylammonium-C2-C6-alkyl(meth)acrylate halides, and trimethylammonium-C2-C6-alkyl(meth)acrylamide halides,
   wherein the polymeric dispersant is a homopolymer made of a (meth)acryloyl amidopropyl trimethylammonium salt,
   and wherein the total weight of the polymeric dispersant based on the total weight of the polymer dispersion is in the range of 10 to 28 wt.-%, preferred 12 to 26 wt.%, more preferred 14 to 24 wt.-%, even more preferred 16 to 22 wt.-%.
(K) Polymer dispersion obtained by any one of the above items (A) to (J).

Further, the following items are disclosed herewith:
1. Method for manufacturing a polymer dispersion comprising the steps of
   A) providing a reaction mixture in an aqueous medium comprising
      a) a polymeric dispersant and
      b) a monomer composition comprising radically polymerizable monomers, wherein the radically polymerizable monomers are selected from the group consisting of one or more of a non-ionic ethylenically unsaturated monomer, a cationic ethylenically unsaturated monomer and an amphiphilic ethylenically unsaturated monomer;
   B) subjecting the monomer composition to a radical polymerization to synthesize a dispersed polymer and to form the polymer dispersion,
   wherein the polymeric dispersant has a weight average molecular weight M_{w} as determined by size exclusion chromatography of 40.000 to less than 150.000 g/mol, preferred 50.000 to 140.000 g/mol, more preferred 60.000 to 130.000, most preferred 85.000 to 125.000 g/mol.
2. Method according to item 1, characterized in that the monomer composition comprising the radically polymerizable monomers are selected from the group consisting of one or more of the following:
   i. a non-ionic monomer of formula (I) 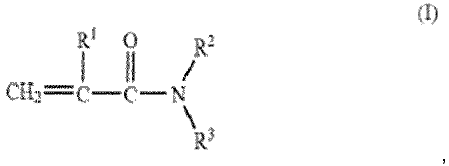 where
      R¹ means hydrogen or methyl;
      R² and R³ are, independently of each other, hydrogen, C₁-C₅-alkyl or C₁-C₅-hydroxyalkyl,
   ii. a cationic monomer of formula (II) 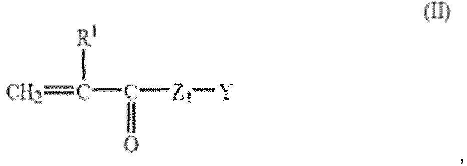 where
      R¹ means hydrogen or methyl;
      Z₁ is O, NH or NR₄, wherein R₄ means C₁-C₄-alkyl, preferably methyl, and
      Y is one of 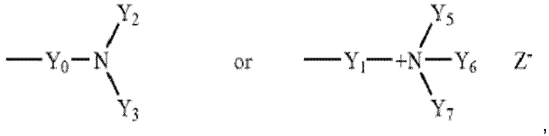 where
      Y₀ and Y₁ are a C₁-C₆ alkylene group, optionally substituted with one or more hydroxy groups, preferably ethylene or propylene, optionally substituted with one hydroxy group;
      Y2, Y3, Y5, Y6, Y7 independently of each other, are each C₁-C₆-alkyl, preferably methyl; and
      Z⁻ is a counterion, preferably a halogen, pseudo-halogen, acetate,
      or SO₄CH₃⁻; and
   iii. an amphiphilic monomer of formulae (III) or (IV) 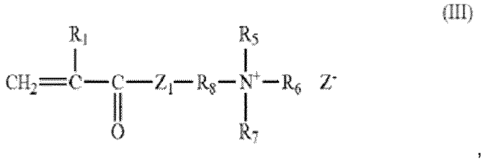 where
      Z₁ is O, NH, NR₄, wherein R₄ means C₁-C₄-alkyl, preferably methyl,
      R₁ means hydrogen or methyl,
      R₈ is a C₁-C₆ alkylene group, preferably ethylene or propylene,
      R₅ and R₆ are, independently of each other, each C₁-C₆-alkyl, preferably methyl,
      R₇ is a C₈-C₃₂ alkyl, optionally substituted with one or more hydroxy groups, preferably C₁₂-C₂₀ alkyl, optionally substituted with one hydroxy group, and
      Z⁻ is a counterion, preferably a halogen, pseudo-halogen, acetate,
      or SO₄CH₃⁻; or 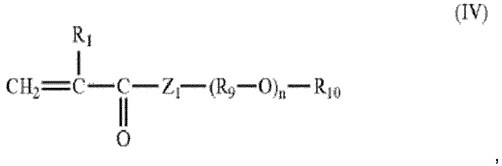 where
      Z₁ is O, NH, NR₄, wherein R₄ means C₁-C₄-alkyl, preferably methyl,
      R₁ means hydrogen or methyl,
      R₁₀ means hydrogen, C₈-C₃₂ alkyl, C₈-C₃₂ aryl and/or C₈-C₃₂ aralkyl, preferably C₁₂-C₂₀ alkyl,
      R₉ is a C₁-C₆ alkylene group, preferably an ethylene group or propylene group, and
      n is an integer between 1 and 50, preferably between 2 and 30, more preferred 3 and 15, most preferred 4 and 8.
3. Method according to item 1 or item 2, characterized in that the monomer composition comprising the radically polymerizable monomers at least comprises the non-ionic monomer of formula (I) being selected from those in which R¹ means hydrogen or methyl, and R² and R³ are both hydrogen, hydrogen and C1-C3 alkyl, hydrogen and hydroxyethyl, or both C₁-C₃ alkyl, and/or the cationic monomer of formula (II) being selected from those in which R¹ means hydrogen or methyl, and Z₁ is O, NH or NR₄, wherein R₄ means methyl, Y₁ is C₂-C₆ alkylene, preferably ethylene or propylene, Y₅, Y₆ and Y₇ are all methyl, and Z is a halogen.
4. Method according to item 1 or item 3, characterized in that the radically polymerizable monomers are selected from the non-ionic monomer of formula (I) and/or the cationic monomer of formula (II), wherein the amount of the radically polymerizable monomers being selected from the non-ionic monomer of formula (I) and/or the cationic monomer of formula (II) is between 80 and less than 100 wt-%, preferred 85 and 99 wt-%, most preferred 90 and 95 wt-% based on the total amount of radically polymerizable monomers, wherein the remainder is selected from the group consisting of any other ethylenically polymerizable monomer, a monomer of formula (III), a monomer of formula (IV), and a difunctional ethylenically polymerizable monomer.
5. Method according to any one of items 1 to 4, characterized in that the polymeric dispersant is selected from the group consisting of a cellulose derivative, polyvinyl acetate, starch, starch derivative, dextran, polyvinylpyrrolidone, polyvinylpyridine, polyethylene imine, polyamine, polyvinyl imidazole, polyvinyl succinimide, polyvinyl-2-methylsuccinimide, polyvinyl-1,3-oxazolidone-2, polyvinyl-2-methylimidazoline, itaconic acid, (meth)acrylic acid, (meth)acrylic acid ester, (meth)acrylic acid amide; preferably a (meth)acryloyl amidoalkyl trialkylammonium halide or a (meth)acryloxyalkyl trialkylammonium halide.
6. Method according to any one of items 1 to 5, characterized in that the polymeric dispersant is a homopolymer made of the cationic monomer of formula (II) 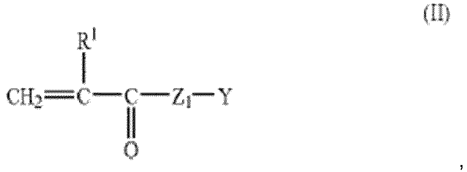 where
   R¹ means hydrogen or methyl;
   Z₁ is O, NH or NR₄, wherein R₄ means C₁-C₄-alkyl, preferably methyl, and
   Y is one of 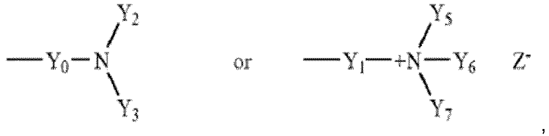 where
   Y₀ and Y₁ are a C₁-C₆ alkylene group, optionally substituted with one or more hydroxy groups, preferably ethylene or propylene, optionally substituted with one hydroxy group;
   Y2, Y3, Y5, Y6, Y7 independently of each other, are each C₁-C₆-alkyl, preferably methyl; and
   Z⁻ is a counterion, preferably a halogen, pseudo-halogen, acetate, or SO₄CH₃⁻.
7. Method according to any one of items 1 to 6, characterized in that the polymeric dispersant is a homopolymer made of a (meth)acryloyl amidopropyl trimethylammonium salt or a (meth)acryloyl oxyethyl trimethylammonium salt.
8. Method according to any one of items 1 to 7, characterized in that the charge density of the dispersed polymer amounts to 5 to 40 mole%, preferably 8 to 35 mole%, more preferred 10 to 30 mole%, most preferred 12 to 28 mole%.
9. Method according to any one of items 1 to 8, characterized in that the total weight of the polymeric dispersant based on the total weight of the polymer dispersion is in the range of 10 to 28 wt.-%, preferred 12 to 26 wt.%, more preferred 14 to 24 wt.-%, even more preferred 16 to 22 wt.-%.
10. Method according to any one of items 1 to 9, characterized in that step B) is conducted by sequentially or simultaneously adding to the reaction mixture at least a part of a predetermined amount of a redox initiator system comprising an oxidizing agent and a reducing agent, at least a part of a predetermined amount of a first radical initiator and at least a part of a predetermined amount of a second radical initiator.
11. Method according to any one of items 1 to 10, characterized in that the method comprises the step of
   C) reducing the residual monomer content by adding to the reaction mixture the remainder of said predetermined amount of the redox initiator system, the remainder of said predetermined amount of the first radical initiator, and/or the remainder of said predetermined amount of the second radical initiator; and/or a third radical initiator.
12. A polymer dispersion comprising
   a) a polymeric dispersant and
   b) dispersed polymer derived from a monomer composition comprising radically polymerizable monomers, wherein the radically polymerizable monomers are selected from the group consisting of one or more of a non-ionic ethylenically unsaturated monomer, a cationic ethylenically unsaturated monomer and an amphiphilic ethylenically unsaturated monomer;
   wherein the polymeric dispersant has a weight average molecular weight M_{w} as determined by size exclusion chromatography of 40.000 to less than 150.000 g/mol, preferred 50.000 to 140.000 g/mol, more preferred 60.000 to 130.000, most preferred 85.000 to 125.000 g/mol.
13. A polymer dispersion obtained by a method for manufacturing the polymer dispersion according to any one of items 1 to 11 comprising the steps of
   A) providing a reaction mixture in an aqueous medium comprising
      a) a polymeric dispersant and
      b) a monomer composition comprising radically polymerizable monomers, wherein the radically polymerizable monomers are selected from the group consisting of one or more of a non-ionic ethylenically unsaturated monomer, a cationic ethylenically unsaturated monomer and an amphiphilic ethylenically unsaturated monomer;
   B) subjecting the monomer composition to a radical polymerization to synthesize a dispersed polymer and to form the polymer dispersion,
   wherein the polymeric dispersant has a weight average molecular weight M_{w} as determined by size exclusion chromatography of 40.000 to less than 150.000 g/mol, preferred 50.000 to 140.000 g/mol, more preferred 60.000 to 130.000, most preferred 85.000 to 140.000 g/mol.
14. Use of the polymer dispersion according to item 12 or item 13
   a. as a flocculant in the sedimentation, flotation or filtration of solids,
   b. as a thickener,
   c. as a contaminant control,
   d. as a dry strength aid, retention agent or drainage aid in papermaking.

### EXAMPLES

In the following, the applied test methods are described in detail:
The stability is determined via two distinguishing methods: (a) centrifugation and (b) oven test. The tests are performed as follows:
(a) 100 ± 0.1 g of dispersion is weighed into a centrifugation tube. The tube is place into lab centrifuge (Hermle Z300) and is centrifuged for 1 h @ 4000 rpm. The, the liquid part of the sample is phased out over 3 min and the sediment in the centrifugation tube is weighed back. Higher sediment means lower phase stability.
(b) Sample is stored in a drying oven at 40°C for 3 d. The appearance is monitored visually.

The molar mass is measured via Size Exclusion Chromatography (SEC). The measurement is in particular performed for the determination of the molecular weight of the dispersant.

The molecular weights are characterized via aqueous SEC using Pullulan standards for the calibration.

### Sample Preparation:

The samples are diluted with the eluent (polymer make-down in a measuring flask) and filtered through a 1µm filter (M&N) (via syringe) before they are injected.

If the machine is equipped with an autosampler filter the solution through a 1µm filter into a vial.

### Used parameters:

| | |
|---|---|
| apparatus: | SEC (Agilent) |
| column: | Novema 3000 (PSS) |
| detector: | Rl |
| eluent: | 1.5 wt% formic acid in water |
| flow rate: | 1 ml/min |
| calibration standards: | pullulan with different Mw |

The product viscosity is measured as follows:
Use the product directly for the measurement. The spindle No. 5 is slowly immersed into the product and the viscosity determined with a Brookfield RVT viscometer at 10 rpm. The measurement is terminated when the reading remains constant for a period of 30 sec.

The solution viscosity is measured in DI Water and determined as follows:
In a 400 ml beaker 323.0 ± 0.1 g demineralised water is weighed. Then 17.0 ± 0.1 g of the product are added (22 ± 3°C) under stirring at 300 rpm. The dissolving time amounts to 60 min. at 300 ±10 rpm. Thereafter, the solution has to rest for 5 min. Now the spindle No. 2 is slowly immersed, and the viscosity determined with a Brookfield RFT viscometer at 10 rpm. The measurement is terminated when the reading remains constant for a period of 30 sec.

The salt viscosity is measured in a 10% NaCl solution and determined as follows:
In a 400 ml beaker 289.0 ± 0.1 g demineralized water is weighed. Then 17.0 ± 0.1 g of the product are added (22 ± 3°C) under stirring at 300 rpm. The dissolving time amounts to 45 min. at 300 ± 10 rpm and then 34.0 ± 0.1 g NaCl is added. The solution is stirred for further 15 min. After this the solution has to rest for 5 min. Now the spindle No. 1 is slowly immersed, and the viscosity determined with a Brookfield RVT viscometer at 10 rpm. The measurement is terminated when the reading remains constant for a period of 30 sec.

The following examples further illustrate the invention but are not to be construed as limiting its scope.

### Example 1: Synthesis of low molecular weight polymeric dispersant:

At first, 294.06 g water, 666.7 g acryloyl amidopropyl trimethylammonium chloride (DIMAPA quat.) (60wt%) and sulfuric acid (50wt%) to adjust the pH to 5.0 ± 0.2 were weighed in a 2 L vessel. Then the monomer solution was sparged with nitrogen for 30 min by stirring. Subsequently, the aqueous solution was heated up to 60 °C and 2-mercaptoethanol and V-50 (2,2'-Azobis(2-amidinopropane) dihydrochloride) were added to the solution. After reaching Tmax, two additional portions of initiator (V-50) were given to the product in between 10 min for residual monomer burn out. The product was stirred for 2 h at 85°C. Then, the final aqueous product was cooled down to 30°C. The dispersants were provided in 40 wt.-% aqueous solutions.

### Specifications:

- Product viscosity [mPas]: 110-180
- pH (neat): 4.9-5.3
- Total solids [%]: 40-43
- Mw_{SEC} [g/mol]: 70000-110000

The Mw is adjusted via variation of the chain transfer agent 2-mercaptoethanol (2-ME).

### Example 2: Synthesis of polymer dispersion (charge density of dispersed polymer 15 mole%)

In a discontinuous process (batch size 1,000 kg), acrylamide and acryloyl oxyethyl trimethylammonium chloride (ADAME quat.) were polymerized in an aqueous solution in the presence of homopoly acryloyl amidopropyl trimethylammonium chloride (polymeric dispersant). The water-phase was prepared at 200 rpm.

Firstly, 206.90 kg soft water, 261.80 kg Bio-acryl amide (49 wt.-%), 77.20 kg acryloyl oxyethyl trimethylammonium chloride (ADAME quat) (80 wt%), 412.50 kg polymeric dispersant of Example 1, 10.00 kg ammonium sulphate and 0.20 kg Trilon C were loaded into the reaction vessel. The pH value was adjusted to pH 5.0±0.2 with approximately 0.10 kg of sulphuric acid (50 %). The vessel was heated up to 30°C and was evacuated five times before being aerated with nitrogen. The initiator composition was added at a negative pressure of 0.5 bar and maximum agitator speed. Initiating started at 22±1 °C with the addition of 0.34 kg V-50 in 3.05 kg soft water, 0.025 kg sodium persulfate in 0.47 kg soft water, 0.014 kg sodium bisulfite in 0.27 kg soft water, and 0.003 kg t-butylhydroperoxide (70 %) in 1 kg soft water. Afterwards the vessel was aerated again with nitrogen. After reaching the maximum temperature, a solution of 0.17 kg V-50 in 1.53 kg soft water was added to reduce the monomer content. After a one-hour post reaction time, the product was cooled down to a temperature below 40°C. Then, 8.30 kg citric acid and 0.82 kg of the biocide Acticide SPX were added and the product was cooled down to a temperature below 30°C.

**Table 1:**

| | |
|---|---|
| Dry DP-742*¹⁾ [%] | 16.5 |
| Actives [%] | 19.0 |
| Charge hMw [mole%] | 15.0 |
| Charge total [mole%] | 44.5 |

| | |
|---|---|
| *¹⁾ Polymer of Example 1 calculated in its dry content | |

### Specifications:

- Product viscosity [mPas]: <6000
- Solution viscosity [mPas]: 400-2000
- Salt viscosity [mPas]: 400-700
- residual acrylamide [ppm]: <95
- pH (neat): 3-4

In the following, the effect of the weight average molecular weight of the dispersant on the product performance is evaluated:
The following polymer dispersions have been produced: The polymer dispersions with the sample designation "PC8915" and "PC8925" being produced in accordance with the invention, and further there are produced two polymer dispersions with the sample designation "PK2320" being a reference examples. The molecular weight of the polymer dispersions in line with the invention amounts to around 100,000 g/mol. The molecular weight of the polymer dispersion in line with the reference example amounts to more than 300,000 g/mol.

As can be gathered from Table 2, the viscosity of the polymer dispersion and stability of the polymer dispersion are ameliorated.

The stability is evaluated by the centrifuge test. This test is performed in that the manufactured polymer dispersion is subjected to the action of a centrifuge. After such treatment, the supernatant on top of the sediment phase is analyzed in terms of the polymeric dispersant content. The higher the content in the supernatant, the less polymeric dispersant active for the dispersing the dispersed polymer, i.e. the less stable the polymer dispersion.

The beneficial technical effects are further ameliorated if the amount of polymeric dispersant is increased up to a certain level.

Sample PK2320 has a very low ratio of dispersant to dispersed phase and a high weight average molecular weight. The product viscosity is very high and the stability is much worse compared to those where the weight average molecular weight is in the range according to the invention.

One batch of sample PK2320 was prepared with post-addition of dispersant. The addition of dispersant is performed in order to decrease the product viscosity and in order to fulfill the required specification of applicants.

**Tab. 2:**

| Sample | pAPTAC dispersant [%] | AETAC-AM dispersed phase [%] | Ratio dispersant to dispersed phase | Mw dispersant [g/mol] | Product viscosity [mPas] | Stability sediment centrifuge [%] |
|---|---|---|---|---|---|---|
| PC8915 | 16.5 | 19.0 | 0.868 | 90-120,000 | ca. 4000 | 15 |
| PC8925 | 20.0 | 19.2 | 1.041 | 90-120,000 | ca. 5000 | 15 |
| PK2320 | 9.0 | 19.0 | 0.474 | 300-400,000 | ca. 11000; with post-addition of dispersant | 40 |
| | 10.4 | 17.8 | 0.584 | 300-400,000 | | |

The stability can be observed by visual inspection. Fig. 1 shows a stable dispersion in line with the invention. Fig.2 shows polymer dispersions being instable with visually observable phase separation.

## Claims

1. Method for manufacturing a polymer dispersion comprising the steps of
A) providing a reaction mixture in an aqueous medium comprising
a) a polymeric dispersant and
b) a monomer composition comprising radically polymerizable monomers, wherein the radically polymerizable monomers are selected from the group consisting of one or more of a non-ionic ethylenically unsaturated monomer, a cationic ethylenically unsaturated monomer, and an amphiphilic ethylenically unsaturated monomer;
B) subjecting the monomer composition to a radical polymerization to synthesize a dispersed polymer and to form the polymer dispersion,
wherein the polymeric dispersant has a weight average molecular weight M_{w} as determined by size exclusion chromatography of 40.000 to less than 150.000 g/mol; and wherein the polymeric dispersant is a homopolymer made of the cationic monomer of formula (II) 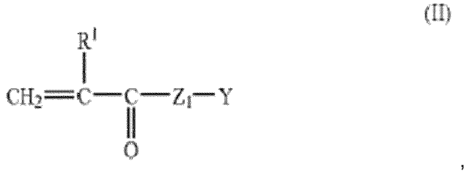 where
R¹ means hydrogen or methyl;
Z₁ is NH or NR₄, wherein R₄ means C₁-C₄-alkyl, and
Y is one of 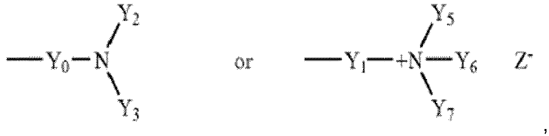 where
Y₀ and Y₁ are a C₁-C₆ alkylene group, optionally substituted with one or more hydroxy groups;
Y₂, Y₃, Y₅, Y₆, Y₇ independently of each other, are each C₁-C₆-alkyl; and
Z⁻ is a counterion.

2. Method according to claim 1, **characterized in that** the monomer composition comprising the radically polymerizable monomers are selected from the group consisting of one or more of the following:
i. a non-ionic monomer of formula (I) 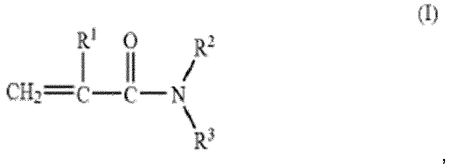 where
R¹ means hydrogen or methyl;
R² and R³ are, independently of each other, hydrogen, C₁-C₅-alkyl or C₁-C₅-hydroxyalkyl,
ii. a cationic monomer of formula (II) 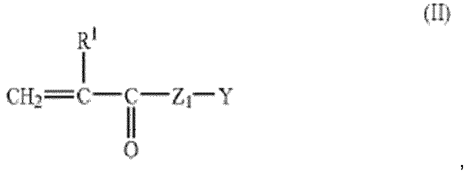 where
R¹ means hydrogen or methyl;
Z₁ is O, NH or NR₄, wherein R₄ means C₁-C₄-alkyl, preferably methyl, and
Y is one of 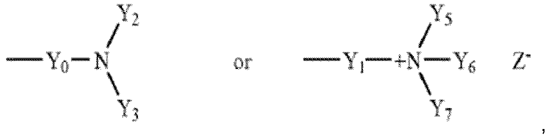 where
Y₀ and Y₁ are a C₁-C₆ alkylene group, optionally substituted with one or more hydroxy groups, preferably ethylene or propylene, optionally substituted with one hydroxy group;
Y2, Y3, Y5, Y6, Y7 independently of each other, are each C₁-C₆-alkyl, preferably methyl; and
Z⁻ is a counterion, preferably a halogen, pseudo-halogen, acetate,
or SO₄CH₃⁻;
iii. an amphiphilic monomer of formulae (III) or (IV) 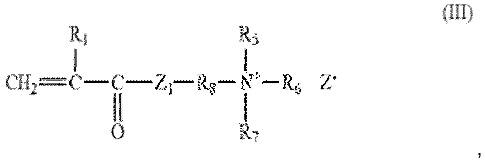 where
Z₁ is O, NH, NR₄, wherein R₄ means C₁-C₄-alkyl, preferably methyl,
R₁ means hydrogen or methyl,
R₈ is a C₁-C₆ alkylene group, preferably ethylene or propylene,
R₅ and R₆ are, independently of each other, each C₁-C₆-alkyl, preferably methyl,
R₇ is a C₈-C₃₂ alkyl, optionally substituted with one or more hydroxy groups, preferably C₁₂-C₂₀ alkyl, optionally substituted with one hydroxy group, and
Z⁻ is a counterion, preferably a halogen, pseudo-halogen, acetate,
or SO₄CH₃⁻; or 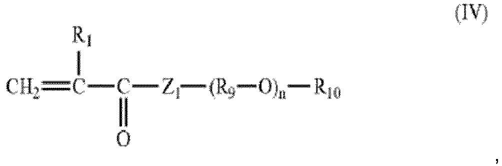 where
Z₁ is O, NH, NR₄, wherein R₄ means C₁-C₄-alkyl, preferably methyl,
R₁ means hydrogen or methyl,
R₁₀ means hydrogen, C₈-C₃₂ alkyl, C₈-C₃₂ aryl and/or C₈-C₃₂ aralkyl, preferably C₁₂-C₂₀ alkyl,
R₉ is a C₁-C₆ alkylene group, preferably an ethylene group or propylene group, and
n is an integer between 1 and 50, preferably between 2 and 30, more preferred 3 and 15, most preferred 4 and 8; and
iv. an ethylenically unsaturated cross-linker containing 2, 3, 4 or 5 ethylenically unsaturated groups.

3. Method according to claim 1 or claim 2, **characterized in that** the monomer composition comprising the radically polymerizable monomers at least comprises the non-ionic monomer of formula (I) being selected from those in which R¹ means hydrogen or methyl, and R² and R³ are both hydrogen, hydrogen and C1-C3 alkyl, hydrogen and hydroxyethyl, or both C₁-C₃ alkyl, and/or the cationic monomer of formula (II) being selected from those in which R¹ means hydrogen or methyl, and Z₁ is O, NH or NR₄, wherein R₄ means methyl, Y₁ is C₂-C₆ alkylene, preferably ethylene or propylene, Y₅, Y₆ and Y₇ are all methyl, and Z is a halogen.

4. Method according to any one of claims 1 to 3, **characterized in that** the monomer composition comprising the radically polymerizable monomers comprises
- at least 5 wt.-%, preferably at least 20 wt.-% of the non-ionic monomer of formula (I) 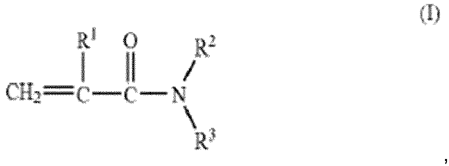 where
R¹ means hydrogen or methyl;
R² and R³ are, independently of each other, hydrogen, C₁-C₅-alkyl or C₁-C₅-hydroxyalkyl;
- at least 5 wt.-%, preferably at least 20 wt.-%, more preferred 25 to 47 wt.-%, most preferred 50.5 to 80 wt.-%, of the cationic monomer of formula (II) 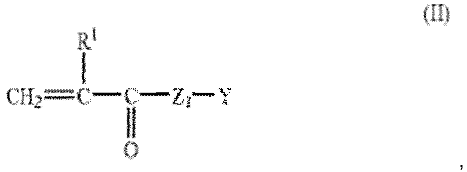 where
R¹ means hydrogen or methyl;
Z₁ is O, NH or NR₄, wherein R₄ means C₁-C₄-alkyl, preferably methyl, and
Y is one of 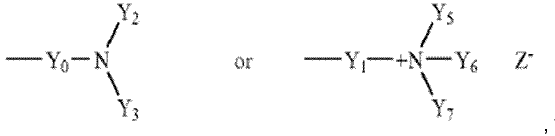 where
Y₀ and Y₁ are a C₁-C₆ alkylene group, optionally substituted with one or more hydroxy groups, preferably ethylene or propylene, optionally substituted with one hydroxy group;
Y2, Y3, Y5, Y6, Y7 independently of each other, are each C₁-C₆-alkyl, preferably methyl; and
Z⁻ is a counterion, preferably a halogen, pseudo-halogen, acetate, or SO₄CH₃⁻;
- 0 to 1.25 wt.-%, preferably 0.0001 to 1 wt.-% of the ethylenically unsaturated cross-linker containing 2, 3, 4 or 5 ethylenically unsaturated groups; and
- optionally, further ethylenically unsaturated monomers.

5. Method according to any one of claims 1 to 4, **characterized in that** the radically polymerizable monomers are selected from the non-ionic monomer of formula (I) and/or the cationic monomer of formula (II), wherein the amount of the radically polymerizable monomers being selected from the non-ionic monomer of formula (I) and/or the cationic monomer of formula (II) is between 80 and less than 100 wt-%, preferred 85 and 99 wt-%, most preferred 90 and 95 wt-% based on the total amount of radically polymerizable monomers, wherein the remainder is selected from the group consisting of any other ethylenically polymerizable monomer, a monomer of formula (III), a monomer of formula (IV), and an ethylenically unsaturated cross-linker containing 2, 3, 4 or 5 ethylenically unsaturated groups.

6. Method according to any one of claims 1 to 5, **characterized in that** the polymeric dispersant is a homopolymer made of the cationic monomer of formula (II) 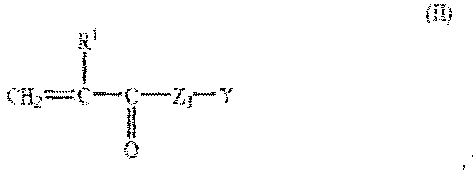 where
R¹ means hydrogen or methyl;
Z₁ is NH or NR₄, wherein R₄ means methyl, and
Y is one of 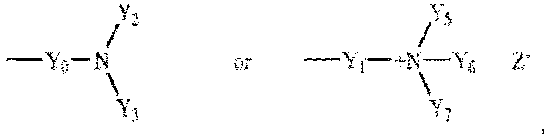 where
Y₀ and Y₁ are ethylene or propylene, optionally substituted with one hydroxy group;
Y₂, Y₃, Y₅, Y₆, Y₇ independently of each other are each methyl; and
Z⁻ is a halogen, pseudo-halogen, acetate, or SO₄CH₃⁻.

7. Method according to any one of claims 1 to 6, **characterized in that** the polymeric dispersant is a homopolymer made of a (meth)acryloyl amidopropyl trimethylammonium salt.

8. Method according to any one of claims 1 to 7, **characterized in that** the charge density of the dispersed polymer amounts to 5 to 40 mole%, preferably 8 to 35 mole%, more preferred 10 to 30 mole%, most preferred 12 to 28 mole%.

9. Method according to any one of claims 1 to 8, **characterized in that** the total weight of the polymeric dispersant based on the total weight of the polymer dispersion is in the range of 10 to 28 wt.-%, preferred 12 to 26 wt.%, more preferred 14 to 24 wt.-%, even more preferred 16 to 22 wt.-%.

10. Method according to any one of claims 1 to 9, **characterized in that** the ethylenically unsaturated cross-linker is a cross-linker containing 2,3 3, or 4 ethylenically unsaturated groups being preferably selected from the group consisting of methylene bisacrylamide, polyethylene glycol diacrylate, triallylamine, and tetraallyl ammonium chloride.

11. Method according to any one of claims 1 to 10, **characterized in that** the polymer dispersion has a salt content of less than 15 wt.%, more preferred a salt content of 0.1 to 10 wt.-%, more preferred 1 to 5 wt.-%, based on the total weight of the polymer dispersion.

12. A polymer dispersion comprising
a) a polymeric dispersant and
b) dispersed polymer derived from a monomer composition comprising radically polymerizable monomers, wherein the radically polymerizable monomers are selected from the group consisting of one or more of a non-ionic ethylenically unsaturated monomer, a cationic ethylenically unsaturated monomer, and an amphiphilic ethylenically unsaturated monomer;
wherein the polymeric dispersant has a weight average molecular weight M_{w} as determined by size exclusion chromatography of 40.000 to less than 150.000 g/mol; and wherein the polymeric dispersant is a homopolymer made of the cationic monomer of formula (II) 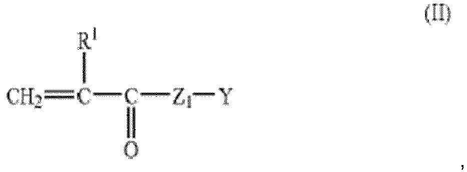 where
R¹ means hydrogen or methyl;
Z₁ is NH or NR₄, wherein R₄ means C₁-C₄-alkyl, and
Y is one of 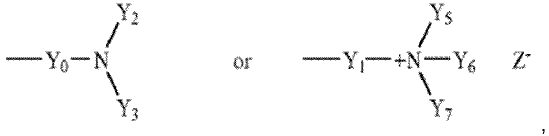 where
Y₀ and Y₁ are a C₁-C₆ alkylene group, optionally substituted with one or more hydroxy groups;
Y₂, Y₃, Y₅, Y₆, Y₇ independently of each other, are each C₁-C₆-alkyl; and
Z⁻ is a counterion.

13. A polymer dispersion obtained by a method for manufacturing the polymer dispersion according to any one of claims 1 to 11 comprising the steps of
A) providing a reaction mixture in an aqueous medium comprising
a) a polymeric dispersant and
b) a monomer composition comprising radically polymerizable monomers, wherein the radically polymerizable monomers are selected from the group consisting of one or more of a non-ionic ethylenically unsaturated monomer, a cationic ethylenically unsaturated monomer, and an amphiphilic ethylenically unsaturated monomer;
B) subjecting the monomer composition to a radical polymerization to synthesize a dispersed polymer and to form the polymer dispersion,
wherein the polymeric dispersant has a weight average molecular weight M_{w} as determined by size exclusion chromatography of 40.000 to less than 150.000 g/mol; and wherein the polymeric dispersant is a homopolymer made of the cationic monomer of formula (II) 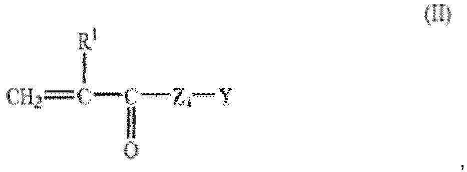 where
R¹ means hydrogen or methyl;
Z₁ is NH or NR₄, wherein R₄ means C₁-C₄-alkyl, and
Y is one of 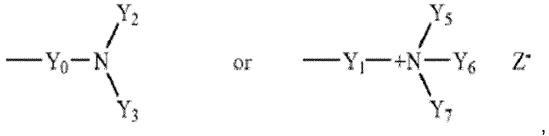 where
Y₀ and Y₁ are a C₁-C₆ alkylene group, optionally substituted with one or more hydroxy groups;
Y₂, Y₃, Y₅, Y₆, Y₇ independently of each other, are each C₁-C₆-alkyl; and
Z⁻ is a counterion.

14. Use of the polymer dispersion according to claim 12 or claim 13
a. as a flocculant in the sedimentation, flotation or filtration of solids,
b. as a thickener,
c. as a contaminant control,
d. as a dry strength aid, retention agent or drainage aid in papermaking.
